# EUROPÄISCHE PATENTSCHRIFT

(11) **EP 2 405 244 B1**
(45) Veröffentlichungstag und Bekanntmachung des Hinweises auf die Patenterteilung: **01.05.2019**
(21) Anmeldenummer: 11004936.8
(22) Anmeldetag: 16.06.2011
(51) Int. Cl.: G01G 11/00, G01G 17/00

(54) **Waage**
Scales
Balance

(30) Priorität: 06.07.2010 DE 102010026207
(43) Veröffentlichungstag der Anmeldung: 11.01.2012
(73) Patentinhaber: Bizerba SE & Co. KG, 72336 Balingen (DE)
(72) Erfinder: Hauck, Timo, 67663 Kaiserslautern (DE)
(74) Vertreter: Manitz Finsterwald Patent- und Rechtsanwaltspartnerschaft mbB

(56) Entgegenhaltungen:
- EP-A2- 0 093 675
- EP-A2- 0 440 999
- EP-A2- 0 622 618

## Beschreibung

Die vorliegende Erfindung betrifft eine Mehrspurwaage, wobei die jeweilige Spur eine Wägezelle und eine auf der Wägezelle abgestützte Antriebsrolle umfasst, mit einer Antriebseinheit und einer Antriebswelle, über die die jeweilige Antriebsrolle in Antriebsverbindung mit der Antriebseinheit steht, wobei die Antriebswelle zwischen zwei jeweiligen Wellenabschnitten, mit denen zwei nebeneinander angeordnete Antriebsrollen drehfest verbunden sind, wenigstens eine Drehmomentübertragungsverbindung aufweist, die bei Belastung der jeweiligen Antriebsrolle durch ein Wägegut ein Abknicken oder Abbiegen der Antriebswelle erlaubt.

Eine derartige Waage ist aus der EP 0 440 999 A2 bekannt. Die dortige Waage ist als eine Förderbandwaage ausgebildet. Bei unbelastetem Förderband, d.h. wenn sich auf dem Förderband kein Wägegut befindet, ist die Antriebswelle geradlinig ausgebildet. Bei Belastung des Förderbands und damit der zugehörigen Antriebsrolle durch ein auf dem Förderband befindliches Wägegut wird das Förderband bzw. die Antriebsrolle geringfügig nach unten gedrückt, so dass die Antriebswelle geknickt bzw. gebogen wird. Dies wird durch ein homokinetisches Gelenk ermöglicht, das eine Drehmomentübertragung in einem geknickten bzw. gebogenen Wellenstrang erlaubt. Allerdings benötigt das zwischen der Antriebseinheit und der Antriebsrolle angeordnete homokinetische Gelenk relativ viel Platz, so dass eine enge Anordnung von Antriebseinheit und Antriebsrolle nicht möglich ist.

Das Dokument EP 0 093 675 A2 offenbart eine Einspurwaage, bei der eine Wägeplatte über ein Gestell auf einer Waage abgestützt ist. Die Wägeplatte umfasst eine Antriebsrolle, die über eine Antriebswelle von einem Motor angetrieben wird. Die Antriebswelle weist an ihren gegenüberliegenden Enden schwimmende Kupplungsverbindungen auf, durch die ein Abknicken des Antriebsstrangs bei Belastung der Wägeplatte durch ein Wägegut ermöglicht wird. Eine der beiden Kupplungsverbindungen ist innerhalb der hohl ausgebildeten Antriebswelle angeordnet.

Der vorliegenden Anmeldung liegt die Aufgabe zugrunde, eine Waage der eingangs genannten Art anzugeben, die eine enge Anordnung von Antriebseinheit und Antriebsrolle bzw. von zwei nebeneinander angeordneten Antriebsrollen ermöglicht.

Diese Aufgabe wird durch eine Waage mit den Merkmalen des Anspruchs 1 gelöst, und insbesondere dadurch, dass die beiden jeweiligen Antriebsrollen zumindest teilweise hohl ausgebildet sind und die wenigstens eine Drehmomentübertragungsverbindung innerhalb einer der beiden jeweiligen Antriebsrollen angeordnet ist.

Bevorzugt weist die Antriebswelle zusätzlich auch zwischen der Antriebseinheit und einem Wellenabschnitt, mit dem die neben der Antriebseinheit angeordnete Antriebsrolle drehfest verbunden ist, wenigstens eine Drehmomentübertragungsverbindung auf, die bei Belastung der jeweiligen Antriebsrolle durch ein Wägegut ein Abknicken oder Abbiegen der Antriebswelle erlaubt, wobei die Antriebsrolle zumindest teilweise hohl ausgebildet ist und die wenigstens eine Drehmomentübertragungsverbindung innerhalb der Antriebsroll angeordnet ist.

Die jeweilige Antriebsrolle weist damit einen Innenraum auf, in den die Antriebswelle eingreift oder durch den die Antriebswelle hindurchgreift. Die Drehmomentübertragungsverbindung ist in dem Innenraum der Antriebsrolle angeordnet. Im Vergleich zu der aus der EP 0 440 999 A2 bekannten Anordnung ist die erfindungsgemäße Drehmomentübertragungsverbindung aus einer Position zwischen zwei Baueinheiten (nämlich Antriebseinheit und Antriebsrolle bzw. Antriebsrolle und Antriebsrolle) in die Antriebsrolle hinein verlagert. Dadurch wird eine enge Anordnung von Antriebseinheit und Antriebsrolle bzw. von zwei nebeneinander angeordneten Antriebsrollen, d.h. eine schmal bauende Anordnung, ermöglicht. Dies ist bei einer Mehrspurwaage vorteilhaft, die von der engen Anordnung zweier benachbarter Baueinheiten mehrfach profitiert. Darüber hinaus kann durch die erfindungsgemäße innenliegende Anordnung die jeweilige Drehmomentübertragungsverbindung gut vor äußeren Einflüssen wie Verschmutzung geschützt werden. Insbesondere ist die Antriebseinheit außerhalb der Antriebsrolle oder Antriebsrollen angeordnet.

Bei einer Mehrspurwaage muss für die mehreren Antriebsrollen nur eine gemeinsame Antriebseinheit und/oder Antriebswelle vorgesehen werden, wobei sich die gemeinsame Antriebswelle durch alle Antriebsrollen hindurch erstreckt, ggf. mit Ausnahme der letzten, von der Antriebseinheit am weitesten entfernten Antriebsrolle, in die sich die Antriebswelle ggf. nur hinein erstreckt. Im Vergleich zu einer einspurigen Waage kann durch eine Mehrspurwaage ein höherer Durchsatz erzielt werden.

Bevorzugt umfasst die Antriebswelle zwischen der Antriebseinheit und dem Wellenabschnitt, mit dem die neben der Antriebseinheit angeordnete Antriebsrolle drehfest verbunden ist, eine weitere Drehmomentübertragungsverbindung, die außerhalb der neben der Antriebseinheit angeordneten Antriebsrolle angeordnet ist, wobei bevorzugt zwischen den beiden Drehmomentübertragungsverbindungen ein starres Wellenzwischenstück angeordnet ist. Bei nur einer Drehmomentübertragungsverbindung sind bei Belastung der jeweiligen Antriebsrolle durch ein Wägegut die Drehachsen der Antriebseinheit und des Wellenabschnitts bzw. der beiden jeweiligen Wellenabschnitte gegeneinander verkippt, so dass ein Kraftnebenschluss auftritt, d.h. ein Teil der Gewichtskraft des Wägeguts wird an der jeweiligen Wägezelle vorbeigeleitet. Aufgrund der in der Regel nur geringen Auslenkung der Antriebsrolle durch die Gewichtskraft des Wägeguts ist dieser Kraftnebenschluss in der Regel jedoch vernachlässigbar. Durch das Vorsehen von zwei Drehmomentübertragungsverbindungen wird eine kraftnebenschlussfreie Drehmomentübertragung ermöglicht, da die beiden vorgenannten Drehachsen dann parallel zueinander verlaufen können. Darüber hinaus sind durch das Vorsehen von zwei Drehmomentübertragungsverbindungen die Auslenkungen des jeweiligen Wellenabschnitts in Richtung der Gewichtskraft und in Richtung senkrecht zur Gewichtskraft und senkrecht zur Drehachse der Antriebswelle unabhängig voneinander, d.h. voneinander entkoppelt.

Bevorzugt weist die Antriebswelle zwischen den beiden jeweiligen Wellenabschnitten, mit denen die zwei nebeneinander angeordneten Antriebsrollen verbunden sind, zwei Drehmomentübertragungsverbindungen auf, von denen die eine innerhalb der einen Antriebsrolle und die andere innerhalb der anderen Antriebsrolle der beiden jeweiligen Antriebsrollen angeordnet ist, wobei bevorzugt zwischen den beiden jeweiligen Drehmomentübertragungsverbindungen ein starres Wellenzwischenstück angeordnet ist. Insbesondere sind innerhalb der jeweiligen Antriebsrolle zwei Drehmomentübertragungsverbindungen angeordnet, zwischen denen der jeweilige Wellenabschnitt angeordnet ist. Hierdurch können dieselben Vorteile erreicht werden, wie sie vorstehend in Zusammenhang mit der weiteren Drehmomentübertragungsverbindung erläutert sind.

Darüber hinaus ist es bevorzugt, wenn in axialer Richtung der jeweilige Wellenabschnitt eine geringere Länge aufweist als das jeweilige Wellenzwischenstück und/oder wenn die drehfeste Verbindung des jeweiligen Wellenabschnitts mit der jeweiligen Antriebsrolle in axialer Richtung der jeweiligen Antriebswelle mittig angeordnet ist. Hierdurch kann die Steifigkeit der Antriebswelle bei einer Auslenkung einer Antriebsrolle reduziert werden. Grundsätzlich ist jedoch auch eine andere Anordnung des jeweiligen Wellenabschnitts, beispielsweise eine seitliche Anordnung, möglich.

Bevorzugt ist die jeweilige Drehmomentübertragungsverbindung als eine Gelenkverbindung, insbesondere ein Kardangelenk, und/oder die Antriebswelle als eine Gelenkwelle, insbesondere eine Kardanwelle, ausgebildet. Bei der Gelenkverbindung kann es sich aber auch um ein homokinetisches Gelenk bzw. ein Weitwinkel- oder Gleichlaufgelenk handeln. Zwischen zwei aufeinander folgenden Drehmomentübertragungsverbindungen, zwischen denen ein starres Wellenzwischenstück der Antriebswelle angeordnet ist, kann ein Schiebegelenk angeordnet sein, um einen Längenausgleich bei einer belasteten Gelenkwelle vorzunehmen. Zwei aufeinander folgende Kardangelenke, zwischen denen ein starres Wellenzwischenstück der Antriebswelle angeordnet ist, sind bevorzugt um 90° gegeneinander verdreht, um eine konstante Drehgeschwindigkeit für den jeweiligen Wellenabschnitt zu erreichen.

Nach einer weiteren Ausbildung der Erfindung ist die jeweilige Antriebsrolle über einen jeweiligen Lastaufnahmehalter auf der jeweiligen Wägezelle abgestützt.

Die jeweilige Antriebsrolle kann in eine jeweilige Antriebsrollenaufnahme des jeweiligen Lastaufnahmehalters eingelegt sein, wobei insbesondere die Antriebsrollenaufnahme zwei nach oben offene gabelförmige Schenkel aufweist, die an den stirnseitigen Enden der jeweiligen Antriebsrolle angeordnet sind. Hierdurch kann eine einfach lösbare Verbindung zwischen der jeweiligen Antriebsrolle und dem jeweiligen Lastaufnahmehalter realisiert werden, was für Wartungs- und Servicearbeiten an der Waage vorteilhaft ist.

Die jeweilige Antriebsrolle kann an ihren stirnseitigen Enden jeweils einen an dem jeweiligen Lastaufnahmehalter gehalterten Gleitlagersitz aufweisen. Grundsätzlich kann jedoch auch ein Wälzlager vorgesehen sein.

Hierbei ist es bevorzugt, wenn zwischen der Antriebswelle und dem jeweiligen Gleitlagersitz ein umlaufender Spalt ausgebildet ist. Hierdurch kann sichergestellt werden, dass zwischen der jeweiligen Antriebsrolle bzw. stirnseitigen Wänden oder Deckeln der jeweiligen Antriebsrolle und der Antriebswelle genügend Spiel vorhanden ist, um einen Wägeausschlag der jeweiligen Spur der Waage zu erlauben, ohne dass die Antriebswelle an der jeweiligen Antriebsrolle anschlägt.

Vorzugsweise ist die Antriebswelle in axialer Richtung, insbesondere über den jeweiligen Wellenabschnitt und die jeweilige Antriebsrolle, schwimmend gelagert. Hierdurch können Längenänderungen ausgeglichen werden, die durch eine Auslenkung der jeweiligen Antriebsrolle durch ein Wägegut hervorgerufen werden. Ferner können hierdurch Fertigungstoleranzen und/oder Wärmeausdehnungen kompensiert werden. Bevorzugt ist die Antriebswelle nicht axialfest, sondern nur drehfest mit dem jeweiligen Wellenabschnitt der jeweiligen Antriebswelle verbunden. Die drehfeste Verbindung kann z.B. durch Formschluss, beispielsweise eine Mehrkantwelle, eine Keilwelle, eine Polygonwelle oder Passfeder, oder durch Reibschluss realisiert sein.

Bevorzugt ist die Antriebswelle mit ihrem einen Ende an der Antriebseinheit stützgelagert, wobei das Gewicht der Antriebswelle zu ihrem anderen Ende hin durch die vorgenannten Lastaufnahmehalter aufgenommen wird. Die hierdurch erzeugte statische Vorlast auf die jeweilige Wägezelle muss dann bei der Bestimmung des Gewichts des jeweiligen Wägeguts herausgerechnet werden. Alternativ kann das andere Ende der Antriebswelle jedoch auch an einer separaten Halterung stützgelagert sein.

Insbesondere im Zusammenhang mit der schwimmenden Lagerung ist es bevorzugt, wenn die Antriebswelle in axialer Richtung in Richtung der Antriebseinheit vorgespannt ist. Die axiale Vorspannung kann durch eine bevorzugt an dem dem antriebseinheitsseitigen Ende gegenüberliegenden Ende der Antriebswelle angreifende Feder bewirkt werden. Alternativ oder zusätzlich kann das jeweilige Wellenzwischenstück aber auch längenveränderlich ausgebildet sein, z.B. durch ineinander greifende Teilwellen.

Bevorzugt sind die jeweilige Wägezelle und/oder die Antriebseinheit gestellfest gehaltert.

Die jeweilige Antriebsrolle kann als Messrolle zur Gewichtsmessung ausgebildet sein, d.h. die Wiegestrecke der Waage ist auf die jeweilige Messrolle verkürzt bzw. bei der jeweiligen Antriebsrolle handelt es sich um eine kombinierte Antriebs- und Messrolle. In diesem Fall wird das Gewicht eines Wägeguts aus dem zeitlichen Verlauf des Messsignals der Wägezelle ermittelt, während sich das Wägegut über die Antriebsrolle hinweg bewegt, beispielsweise durch Integration. Ein Förderband ist dabei nicht vorgesehen. Alternativ kann es sich bei der Antriebsrolle jedoch auch um einen Bestandteil eines Förderbands handeln, das neben der Antriebsrolle zusätzlich auch noch eine nicht angetriebene Umlenkrolle aufweist.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen:
- Fig. 1: eine perspektivische Ansicht einer erfindungsgemäßen Mehrspurwaage mit vier Spuren und einer Antriebseinheit, mit und ohne Gehäuseabdeckung,
- Fig. 2: eine Spur der Mehrspurwaage aus Fig. 1 in Einzeldarstellung,
- Fig. 3: die Mehrspurwaage aus Fig. 1 in Kombination mit einem Zu- und einem Abführband,
- Fig. 4: einen Längsschnitt durch die Mehrspurwaage aus Fig. 1 im Bereich der Antriebseinheit und der ersten beiden Spuren, und
- Fig. 5: einen Längsschnitt durch die Mehrspurwaage aus Fig. 1 im Bereich der vierten Spur.

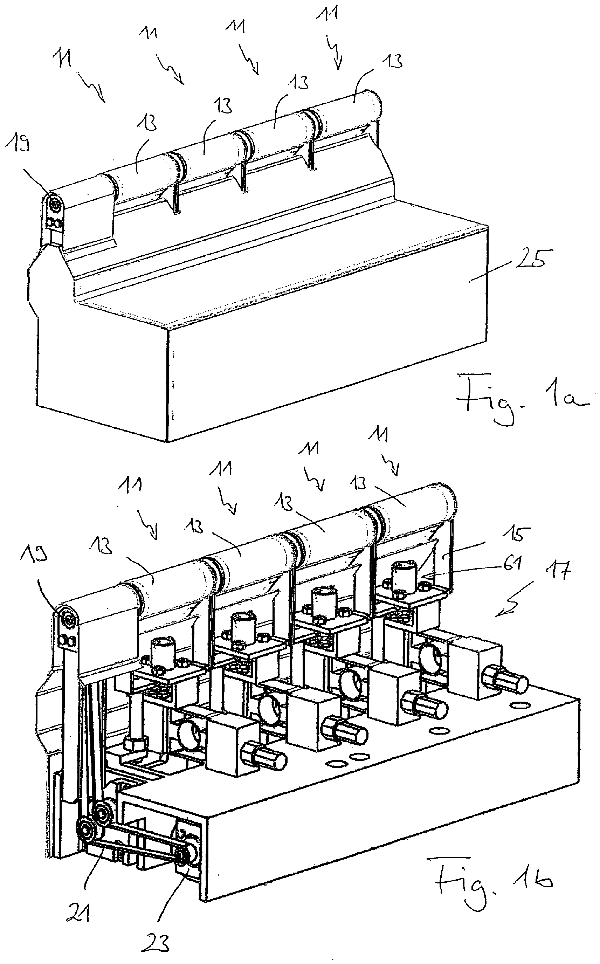

Die in Fig. 1 dargestellte Waage ist vierspurig bzw. -bahnig ausgebildet. Jede Spur 11 umfasst eine Antriebsrolle 13, die über einen Lastaufnahmehalter 15 auf einer Wägezelle 17 abgestützt ist. Die vier Antriebsrollen 13 werden von einer gemeinsamen Antriebswelle 19 angetrieben, die ihrerseits über einen Zahnriemen 21 von einem Motor 23 angetrieben wird. Der Motor 23, der Zahnriemen 21, die Wägezellen 17 und bereichsweise auch die Lastaufnahmehalter 15 sind in vollständig montiertem Zustand der Waage von einem Gehäuse 25 abgedeckt. Die gezeigte Mehrspurwaage umfasst auch eine Überlastsicherung 61, auf die im Rahmen der vorliegenden Anmeldung jedoch nicht weiter eingegangen wird.

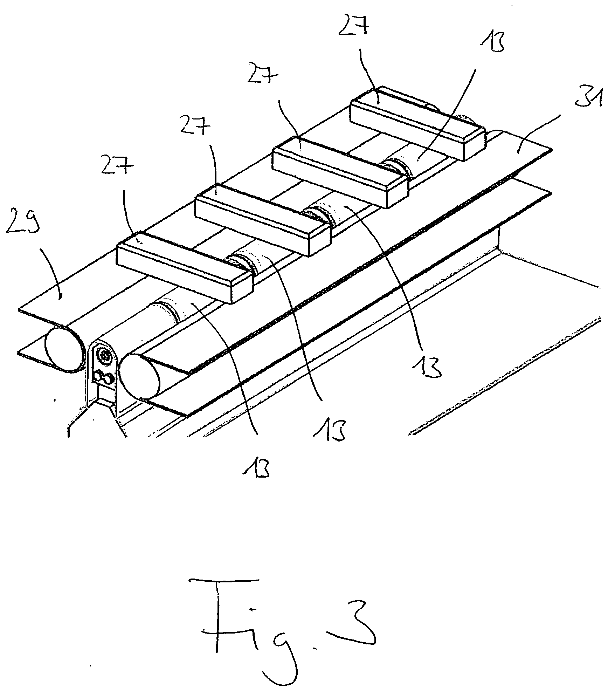

Die Mehrspurwaage erlaubt, Wägegüter 27 (Fig. 3) parallel zu verwiegen, d.h. mehrere Wägegüter 27 nebeneinander und gleichzeitig. Hierzu sind auf der Höhe der Antriebsrollen 13 ein Zuführband 29 und ein Abführband 31 angeordnet, um eine definierte Wägeebene, entlang der die Wägegüter 27 transportiert werden, bereitzustellen.

Bei der gezeigten Mehrspurwaage handelt es sich um eine integrierende Waage, bei der das Gewicht der Wägegüter 27 durch zeitliche Integration der Messsignale der Wägezellen 17 ermittelt wird. Insbesondere wirkt das Gewicht der Wägegüter 27 niemals vollständig auf die Wägezellen 17, sondern die Wägegüter 27 liegen bei ihrem Transport über die Mehrspurwaage immer auch auf dem Zuführband 29 und/oder dem Abführband 31 auf. Bei den Antriebsrollen 13 handelt es sich daher um Messrollen. Die Mehrspurwaage selbst besitzt keine Förderbänder (jeweils mit Antriebsrolle und Umlenkrolle).

Die Mehrspurwaage kann (unabhängig von der in den Figuren gezeigten konkreten Ausführungsform) beispielsweise als eine dynamische Kontrollwaage bzw. als ein Checkweigher eingesetzt werden, die bzw. der innerhalb von Produktionsprozessen zur Produktinspektion oder Gewichtskontrolle verwendet wird, z.B. zur Überprüfung von Füll- oder Verpackungsvorgängen. Die dabei gewonnenen Daten können dann eine Grundlage für statistische Auswertungen zur Qualitätskontrolle bilden. Diese Daten können im Rahmen einer "Inline"-Prozesskontrolle jedoch auch sofort ausgewertet werden, beispielsweise um eine Sortierung (insbesondere eine Aussonderung von Fehlgewichten) oder eine Anpassung einer Füll- oder Dosiermenge vorzunehmen. Dabei wird das Wägegut bevorzugt im Durchlauf gewogen, d.h. die Messungen werden vorgenommen, während sich das Wägegut ohne Stopp über die Wägezelle hinwegbewegt.

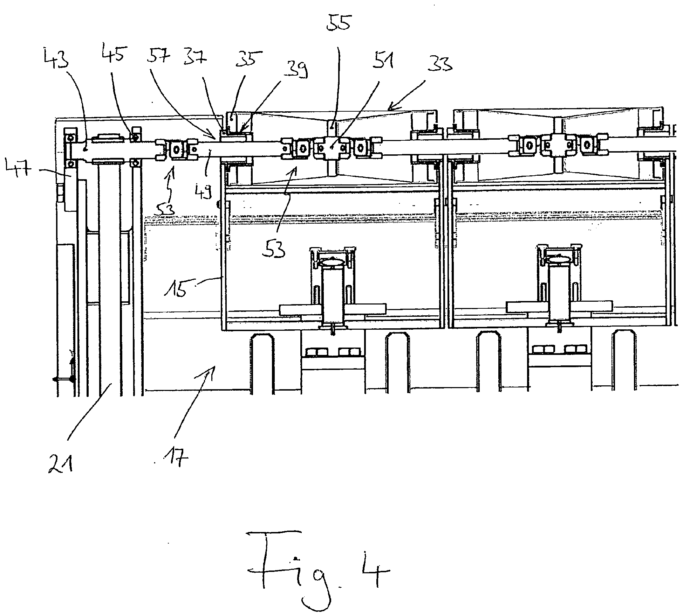

Die um ihre Längsachsen drehbaren Antriebsrollen 13 umfassen einen hohlzylindrischen Rollenkörper 33 (Fig. 4), der an seinen beiden Stirnseiten jeweils mit einem kreisringförmigen Deckel 35 verschlossen ist, d.h. die beiden Deckel 35 weisen jeweils eine zentrale Öffnung auf. In diese Öffnungen ist jeweils ein hülsenförmiger, an dem Lastaufnahmehalter 15 gehalterter und damit drehfester Gleitlagersitz 37 mit einer Lagerung 39 eingesetzt, um ein Drehen des Rollenkörpers 33 relativ zu dem Lastaufnahmehalter 17 zu ermöglichen.

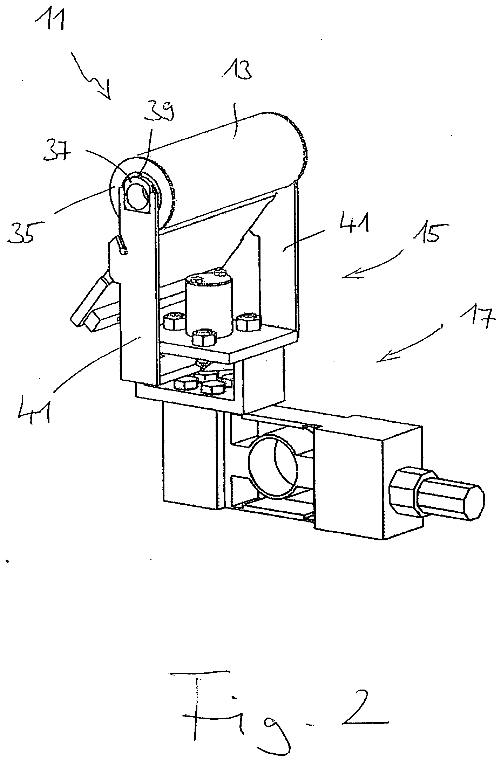

Die Lastaufnahmehalter 15 sind jeweils als U-förmige Halter ausgebildet, d.h. sie weisen jeweils zwei Schenkel 41 auf, zwischen denen die jeweilige Antriebsrolle 13 angeordnet ist (Fig. 2). Die beiden Schenkel 41 sind dabei jeweils nach oben hin gabelförmig ausgebildet, um eine Aufnahme für die beiden Gleitlagersitze 37 der jeweiligen Antriebsrolle 13 zu schaffen, so dass die jeweilige Antriebsrolle 13 durch bloßes Einlegen in den Lastaufnahmehalter 15 an der Mehrspurwaage montiert werden kann.

Zur Antriebsverbindung der Antriebsrollen 13 mit dem Motor 23 (über den Zahnriemen 21) erstreckt sich die Antriebswelle 19 durch sämtliche Antriebsrollen 13 hindurch bzw. in die von dem Motor 23 am weitesten entfernte (vierte oder letzte) Antriebsrolle 13 wenigstens hinein. Die Antriebswelle 19 verläuft dabei durch die hülsenförmigen Gleitlagersitze 37 der Antriebsrollen 13 hindurch. Die Antriebswelle 19 steht dabei mit einem Wellenanfang 43 aus der dem Motor 23 am nächsten liegenden (ersten) Antriebsrolle 13 in Richtung des Motors 23 hervor. Der Wellenanfang 43 ist in axialer Richtung mittig an seiner Peripherie umlaufend gezahnt, um von dem Zahnriemen 21 angetrieben werden zu können. Darüber hinaus ist der Wellenanfang 43 über ein Kugellager 45 an einem Rahmen 47 der Mehrspurwaage abgestützt. Der Wellenanfang 43 ist dabei in axialer Richtung unverschiebbar gehaltert.

Neben dem Wellenanfang 43 umfasst die Antriebswelle 19 pro Antriebsrolle 13 ein Wellenzwischenstück 49 und einen mit der jeweiligen Antriebsrolle 13 drehverbundenen Wellenabschnitt 51, die zueinander alternierend angeordnet sind. Der Wellenanfang 43 und das daran anschließende Wellenzwischenstück 49 sowie das jeweilige Wellenzwischenstück 49 und der daran anschließende Wellenabschnitt 51 bzw. umgekehrt sind jeweils durch eine Gelenkstelle, nämlich durch ein Kardangelenk 53, miteinander verbunden. Die Antriebswelle 19 ist also als eine Kardanwelle ausgebildet, die auch einen geknickten Wellenstrang bei der Drehmomentübertragung erlaubt. Zwei aufeinander folgende Kardangelenke 53 sind jeweils um 90° gegeneinander verdreht, um die Wellenabschnitte 51 mit einer gleichmäßigen Drehgeschwindigkeit antreiben zu können.

Die Antriebsrollen 13 umfassen jeweils eine im Inneren angeordnete Kreisringscheibe 55, die von innen fest - d.h. drehfest und axialfest - an dem jeweiligen Rollenkörper 33 angebracht ist, d.h. insbesondere, dass eine Drehbewegung der Kreisringscheibe 55 zu einer entsprechenden Drehbewegung des Rollenkörpers 33 bzw. der gesamten Antriebsrolle 13 führt.

Die jeweilige Kreisringscheibe 55 wiederum steht in Antriebsverbindung mit dem der jeweiligen Antriebsrolle 13 zugeordneten Wellenabschnitt 51. Diese Antriebsverbindung ist drehfest, jedoch nicht axial fest, d.h. der jeweilige Wellenabschnitt 51 ist in axialer Richtung verschiebbar gelagert. Insgesamt bedeutet dies, dass die Antriebswelle 19 in axialer Richtung schwimmend gelagert ist. Hierfür ist der jeweilige Wellenabschnitt 51 im Querschnitt als Mehrkant ausgebildet, wobei die jeweilige Kreisringscheibe 55 eine entsprechende Gegenform aufweist, um eine formschlüssige Drehmomentübertragung mit axialer Beweglichkeit zu ermöglichen.

Die Kreisringscheiben 55 sind in axialer Richtung der jeweiligen Antriebsrolle 13 jeweils mittig angeordnet, d.h. die Antriebswelle 19 ist bezüglich der jeweiligen Antriebsrolle 13 mittig aufgehängt. Diese Aufhängung der Antriebswelle 19 an den Antriebsrollen 13 bewirkt eine statische Vorlast auf die Wägezellen 17, die bei der Berechnung des Gewichts der von der Mehrspurwaage gewogenen Wägegüter 27 berücksichtigt werden muss. Alternativ kann die Antriebswelle 19 an ihrem dem Motor 23 abgewandten Ende jedoch auch über ein Kugellager an dem Rahmen der Mehrspurwaage abgestützt sein, so dass eine verminderte Schwingungsneigung realisiert werden kann.

Die Ausbildung der Antriebswelle 19 als mehrfach-gelenkige Antriebswelle erlaubt, dass trotz der Verwendung einer für alle Antriebsrollen 13 gemeinsamen Antriebswelle 19 auf mehreren Spuren nebeneinander gleichzeitig gewogen werden kann, da Kraftnebenschlüsse zwischen den Spuren vermieden werden können. Ein auf einer Antriebsrolle 13 befindliches Wägegut 27 wirkt nur auf die der jeweiligen Antriebsrolle 13 zugeordnete Wägezelle 17, jedoch nicht auf die Wägezellen 17 der jeweiligen anderen Antriebsrollen 13. Wird eine der Antriebswellen 13 durch ein Wägegut 27 belastet und nach unten hin ausgelenkt, erfährt der der jeweiligen Antriebsrolle 13 zugeordnete Wellenabschnitt 51 dieselbe Auslenkung. Ein benachbarter Wellenabschnitt 51 ist von dieser Auslenkung durch die dazwischen angeordneten beiden Kardangelenke 53, zwischen denen ein Wellenzwischenstück 49 angeordnet ist, entkoppelt, da hierdurch die Drehachsen des belasteten Wellenabschnitts 51 und des benachbarten Wellenabschnitts 51 weiterhin parallel zueinander verlaufen können. Die Auslenkung wird durch die beiden dazwischen liegenden Kardangelenke 53 und das dazwischen liegende Wellenzwischenstück 49 ausgeglichen.

Das dem Motor 23 nächstliegende Kardangelenk 53 ist zwischen dem Motor 23 und der ersten Antriebsrolle 13 angeordnet. Die anderen Kardangelenke 53 sind innerhalb der Antriebsrollen 13 angeordnet, wobei in den Antriebsrollen 13 jeweils zwei Kardangelenke 52 angeordnet sind, zwischen denen der jeweilige Wellenabschnitt 51 angeordnet ist. Die Antriebswelle 19 umfasst also zwischen den beiden jeweiligen Wellenabschnitten 51, mit denen zwei nebeneinander angeordnete Antriebsrollen 13 drehfest verbunden sind, zwei Kardangelenke 53, von denen das eine innerhalb der einen Antriebsrolle 13 und das andere innerhalb der anderen Antriebsrolle angeordnet ist, wobei zwischen den beiden Kardangelenken 53 jeweils ein starres Wellenzwischenstück 49 angeordnet ist.

Durch die Anordnung der Kardangelenke 53 innerhalb der Antriebsrollen 13 kann eine enge Anordnung der Antriebsrollen 13 nebeneinander erreicht werden, d.h. es kann eine besonders schmal bauende Mehrspurwaage realisiert werden. Darüber hinaus sind die Kardangelenke 53 innerhalb der Antriebsrollen 13 vor äußeren Einflüssen gut geschützt.

Zwischen zwei jeweiligen Antriebsrollen 13 erstreckt sich ein jeweiliges Wellenzwischenstück 49, das an seinem einen Ende mit einem innerhalb der einen Antriebsrolle 13 angeordneten Kardangelenk 53 und mit seinem anderen Ende mit einem innerhalb der anderen Antriebsrolle 13 angeordneten Kardangelenk 53 verbunden ist. Die Wellenzwischenstücke 49 bilden den Übergang zwischen zwei benachbarten Antriebsrollen 13 und erstrecken sich durch die entsprechenden Gleitlagersitze 37 hindurch. Da die Wellenzwischenstücke 49 bei Belastung einer der beiden Antriebsrollen 13, in die sie hineinragen, aus ihrer ansonsten waagerechten Orientierung verkippt werden, ist zwischen dem jeweiligen Wellenzwischenstück 49 und den jeweiligen Gleitlagersitzen 37 ein umlaufender Spalt 57 ausgebildet, so dass eine Knickbewegung der Antriebswelle 13 bei Belastung einer der Antriebsrollen 13 nicht behindert wird.

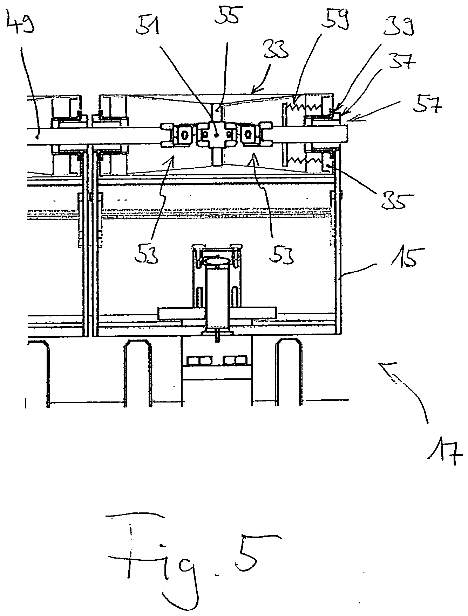

Im Vergleich zu der in den Fig. 1 bis 4 gezeigten Mehrspurwaage weist die in Fig. 5 gezeigte Mehrspurwaage zusätzlich eine an dem von dem Motor 23 abgewandten Ende der Antriebswelle 19 angreifende Druckfeder 59 auf, durch die die Antriebswelle 19 in axialer Richtung in Richtung des Motors 23 vorgespannt ist.

Durch die Anordnung der Kardangelenke innerhalb der Antriebsrollen kann eine besonders kompakt bauende Mehrspurwaage realisiert werden.

### Bezugszeichenliste

- 11: Spur
- 13: Antriebsrolle
- 15: Lastaufnahmehalter
- 17: Wägezelle
- 19: Antriebswelle
- 21: Zahnriemen
- 23: Motor
- 25: Gehäuse
- 27: Wägegut
- 29: Zuführband
- 31: Abführband
- 33: Rollenkörper
- 35: Deckel
- 37: Gleitlagersitz
- 39: Lagerung
- 41: Schenkel
- 43: Wellenanfang
- 45: Kugellager
- 47: Rahmen
- 49: Wellenzwischenstück
- 51: Wellenabschnitt
- 53: Kardangelenk
- 55: Kreisringscheibe
- 57: Spalt
- 59: Druckfeder
- 61: Überlastsicherung

## Patentansprüche

1. Mehrspurwaage, wobei die jeweilige Spur (11) eine Wägezelle (17) und eine auf der Wägezelle (17) abgestützte Antriebsrolle (13) umfasst, mit einer Antriebseinheit (23) und einer Antriebswelle (19), über die die jeweilige Antriebsrolle (13) in Antriebsverbindung mit der Antriebseinheit (23) steht, wobei die Antriebswelle (19) zwischen zwei jeweiligen Wellenabschnitten (51), mit denen zwei nebeneinander angeordnete Antriebsrollen (13) drehfest verbunden sind, wenigstens eine Drehmomentübertragungsverbindung (53) aufweist, die bei Belastung der jeweiligen Antriebsrolle (13) durch ein Wägegut ein Abknicken oder Abbiegen der Antriebswelle (19) erlaubt, wobei die beiden jeweiligen Antriebsrollen (13) zumindest teilweise hohl ausgebildet sind und die wenigstens eine Drehmomentübertragungsverbindung (53) innerhalb einer der beiden jeweiligen Antriebsrollen (13) angeordnet ist, wobei für die mehreren Antriebsrollen (13) eine gemeinsame Antriebswelle (19) vorgesehen ist, wobei sich die gemeinsame Antriebswelle (19) durch alle Antriebsrollen (13) hindurch erstreckt, ggf. mit Ausnahme der letzten, von der Antriebseinheit (23) am weitesten entfernten Antriebsrolle (13), in die sich die Antriebswelle (19) ggf. nur hinein erstreckt.

2. Mehrspurwaage nach Anspruch 1,
**dadurch gekennzeichnet,**
**dass** die Antriebswelle (19) zwischen der Antriebseinheit (23) und einem Wellenabschnitt (51), mit dem die neben der Antriebseinheit (23) angeordnete Antriebsrolle (13) drehfest verbunden ist, wenigstens eine Drehmomentübertragungsverbindung (53) aufweist, die bei Belastung der jeweiligen Antriebsrolle (13) durch ein Wägegut ein Abknicken oder Abbiegen der Antriebswelle (19) erlaubt, wobei die Antriebsrolle zumindest teilweise hohl ausgebildet ist und die wenigstens eine Drehmomentübertragungsverbindung (53) innerhalb der Antriebsrolle (13) angeordnet ist.

3. Mehrspurwaage nach Anspruch 2,
**dadurch gekennzeichnet,**
**dass** die Antriebswelle (19) zwischen der Antriebseinheit (23) und dem Wellenabschnitt (51), mit dem die neben der Antriebseinheit (23) angeordnete Antriebsrolle (13) drehfest verbunden ist, eine weitere Drehmomentübertragungsverbindung (53) umfasst, die außerhalb der neben der Antriebseinheit (23) angeordneten Antriebsrolle (13) angeordnet ist, wobei bevorzugt zwischen den beiden Drehmomentübertragungsverbindungen (53) ein starres Wellenzwischenstück (49) angeordnet ist.

4. Mehrspurwaage nach zumindest einem der vorstehenden Ansprüche,
**dadurch gekennzeichnet,**
**dass** die Antriebswelle (19) zwischen den beiden jeweiligen Wellenabschnitten (51), mit denen die zwei nebeneinander angeordneten Antriebsrollen (13) drehfest verbunden sind, zwei Drehmomentübertragungsverbindungen (53) aufweist, von denen die eine innerhalb der einen Antriebsrolle (13) und die andere innerhalb der anderen Antriebsrolle (13) der beiden jeweiligen Antriebsrollen (13) angeordnet ist, wobei bevorzugt zwischen den beiden jeweiligen Drehmomentübertragungsverbindungen (53) ein starres Wellenzwischenstück (49) angeordnet ist.

5. Mehrspurwaage nach Anspruch 4,
**dadurch gekennzeichnet,**
**dass** in axialer Richtung der jeweilige Wellenabschnitt (51) eine geringere Länge aufweist als das jeweilige Wellenzwischenstück (49).

6. Mehrspurwaage nach zumindest einem der vorstehenden Ansprüche,
**dadurch gekennzeichnet,**
**dass** die drehfeste Verbindung des jeweiligen Wellenabschnitts (51) mit der jeweiligen Antriebsrolle (13) in axialer Richtung der jeweiligen Antriebsrolle (13) mittig angeordnet ist.

7. Mehrspurwaage nach zumindest einem der vorstehenden Ansprüche,
**dadurch gekennzeichnet,**
**dass** die jeweilige Drehmomentübertragungsverbindung (53) als eine Gelenkverbindung, insbesondere ein Kardangelenk, und/oder die Antriebswelle (19) als eine Gelenkwelle, insbesondere eine Kardanwelle, ausgebildet ist.

8. Mehrspurwaage nach zumindest einem der vorstehenden Ansprüche,
**dadurch gekennzeichnet,**
**dass** die jeweilige Antriebsrolle (13) über einen jeweiligen Lastaufnahmehalter (15) auf der jeweiligen Wägezelle (17) abgestützt ist.

9. Mehrspurwaage nach Anspruch 8,
**dadurch gekennzeichnet,**
**dass** die jeweilige Antriebsrolle (13) in eine jeweilige Antriebsrollenaufnahme des jeweiligen Lastaufnahmehalters (15) eingelegt ist, wobei insbesondere die Antriebsrollenaufnahme zwei nach oben offene gabelförmige Schenkel (41) aufweist, die an den stirnseitigen Enden der jeweiligen Antriebsrolle (13) angeordnet sind.

10. Mehrspurwaage nach Anspruch 8 oder 9,
**dadurch gekennzeichnet,**
**dass** die jeweilige Antriebsrolle (13) an ihren stirnseitigen Enden jeweils einen an dem jeweiligen Lastaufnahmehalter (15) gehalterten Gleitlagersitz (37) aufweist, wobei insbesondere zwischen der Antriebswelle (19) und dem jeweiligen Gleitlagersitz (37) ein umlaufender Spalt ausgebildet ist.

11. Mehrspurwaage nach zumindest einem der vorstehenden Ansprüche,
**dadurch gekennzeichnet,**
**dass** die Antriebswelle (19) in axialer Richtung, insbesondere über den jeweiligen Wellenabschnitt (51) und die jeweilige Antriebsrolle (13), schwimmend gelagert ist.

12. Mehrspurwaage nach zumindest einem der vorstehenden Ansprüche,
**dadurch gekennzeichnet,**
**dass** die Antriebswelle (19) in axialer Richtung in Richtung der Antriebseinheit (23) vorgespannt ist.

13. Mehrspurwaage nach Anspruch 12,
**dadurch gekennzeichnet,**
**dass** die axiale Vorspannung durch eine bevorzugt an dem dem antriebseinheitsseitigen Ende gegenüberliegenden Ende der Antriebswelle (19) angreifende Feder (59) bewirkt wird.

14. Mehrspurwaage nach zumindest einem der vorstehenden Ansprüche,
**dadurch gekennzeichnet,**
**dass** die jeweilige Wägezelle (17) und/oder die Antriebseinheit (23) gestellfest gehaltert sind.

15. Mehrspurwaage nach zumindest einem der vorstehenden Ansprüche,
**dadurch gekennzeichnet,**
**dass** die jeweilige Antriebsrolle (13) als Messrolle zur Gewichtsmessung ausgebildet ist.

## Claims

1. A multitrack scale, wherein the respective track (11) comprises a load cell (17) and a drive roller (13) supported at the load cell (17), said multitrack scale comprising a drive unit (23) and a drive shaft (19) via which the respective drive roller (13) is in drive connection with the drive unit (23), with the drive shaft (19) having at least one torque transfer connection (53) between two respective shaft sections (51) to which two drive rollers (13) arranged next to one another are rotationally fixedly connected, said torque transfer connection (53) allowing a kinking or a bending of the drive shaft (19) on a loading of the respective drive roller (13) by a weighing product, wherein the two respective drive rollers (13) are hollow at least in part and the at least one torque transfer connection (53) is arranged within one of the two respective drive rollers (13); wherein a common drive shaft (19) is provided for the plurality of drive rollers (13); and wherein the common drive shaft (19) extends through all of the drive rollers (13), possibly with the exception of the last drive roller (13) which is the furthest remote from the drive unit (23) and which the drive shaft (19) possibly only extends into.

2. A multitrack scale in accordance with claim 1,
**characterized in that**
the drive shaft (19) has at least one torque transfer connection (53) between the drive unit (23) and a shaft section (51) to which the drive roller (13) arranged next to the drive unit (23) is rotationally fixedly connected, said at least one torque transfer connection (53) allowing a kinking or a bending of the drive shaft (19) on a loading of the respective drive roller (13) by a weighing product, with the drive roller being hollow at least in part and the at least one torque transfer connection (53) being arranged within the drive roller (13).

3. A multitrack scale in accordance with claim 2,
**characterized in that**
the drive shaft (19) comprises a further torque transfer connection (53) between the drive unit (23) and the shaft section (51) to which the drive roller (13) arranged next to the drive unit (23) is rotationally fixedly connected, with the further torque transfer connection (53) being arranged outside the drive roller (13) arranged next to the drive unit (23), with a rigid intermediate shaft piece (49) preferably being arranged between the two torque transfer connections (53).

4. A multitrack scale in accordance with at least one of the preceding claims,
**characterized in that**
the drive shaft (19) has two torque transfer connections (53) between the two respective shaft sections (51) to which the two drive rollers (13) arranged next to one another are rotationally fixedly connected, the one of the two torque transfer connections (53) being arranged within the one drive roller (13) and the other of the two torque transfer connections (53) being arranged within the other drive roller (13) of the two respective drive rollers (13), with a rigid intermediate shaft piece (49) preferably being arranged between the two respective torque transfer connections (53).

5. A multitrack scale in accordance with claim 4,
**characterized in that**
the respective shaft section (51) has a smaller length than the respective intermediate shaft piece (49) in an axial direction.

6. A multitrack scale in accordance with at least one of the preceding claims,
**characterized in that**
the rotationally fixed connection of the respective shaft section (51) to the respective drive roller (13) is centrally arranged in the axial direction of the respective drive roller (13).

7. A multitrack scale in accordance with at least one of the preceding claims,
**characterized in that**
the respective torque transfer connection (53) is configured as an articulated connection, in particular as a Cardan joint; and/or **in that** the drive shaft (19) is configured as an articulated shaft, in particular as a Cardan shaft.

8. A multitrack scale in accordance with at least one of the preceding claims,
**characterized in that**
the respective drive roller (13) is supported at the respective load cell (17) via a respective load reception holder (15).

9. A multitrack scale in accordance with claim 8,
**characterized in that**
the respective drive roller (13) is placed into a respective drive roller receiver of the respective load reception holder (15), with the drive roller receiver in particular having two upwardly open fork-like limbs (41) which are arranged at end-face ends of the respective drive roller (13).

10. A multitrack scale in accordance with claim 8 or claim 9,
**characterized in that**
the respective drive roller (13) has a respective plain bearing seat (37) held at the respective load reception holder (15) at its end-face ends, with a peripheral gap in particular being formed between the drive shaft (19) and the respective plain bearing seat (37).

11. A multitrack scale in accordance with at least one of the preceding claims,
**characterized in that**
the drive shaft (19) is supported in a floating manner in the axial direction, in particular via the respective shaft section (51) and the respective drive roller (13).

12. A multitrack scale in accordance with at least one of the preceding claims,
**characterized in that**
the drive shaft (19) is preloaded in the direction of the drive unit (23) in the axial direction.

13. A multitrack scale in accordance with claim 12,
**characterized in that**
the axial preload is effected by a spring (59) which preferably engages at the end of the drive shaft (19) disposed opposite the end at the drive unit side.

14. A multitrack scale in accordance with at least one of the preceding claims,
**characterized in that**
the respective load cell (17) and/or the drive unit (23) is/are held fixed to the rack.

15. A multitrack scale in accordance with at least one of the preceding claims,
**characterized in that**
the respective drive roller (13) is configured as a measurement roller for weight measurement.

## Revendications

1. Balance à plusieurs voies, la voie respective (11) comprenant une cellule de pesage (17) et un rouleau d'entraînement (13) supporté sur la cellule de pesage (17), comportant une unité d'entraînement (23) et un arbre d'entraînement (19) par lequel le rouleau d'entraînement respectif (13) est en liaison d'entraînement avec l'unité d'entraînement (23),
dans laquelle
l'arbre d'entraînement (19) présente au moins une liaison de transmission de couple de rotation (53) entre deux tronçons d'arbre respectifs (51) auxquels deux rouleaux d'entraînement (13) agencés l'un à côté de l'autre sont reliés solidairement en rotation, liaison qui permet un pliage ou un coudage de l'arbre d'entraînement (19) lorsque le rouleau d'entraînement respectif (13) est chargé par une matière à peser,
les deux rouleaux d'entraînement respectifs (13) sont réalisés creux au moins partiellement et ladite au moins une liaison de transmission de couple de rotation (53) est agencée à l'intérieur de l'un des deux rouleaux d'entraînement respectifs (13),
il est prévu un arbre d'entraînement (19) commun pour lesdits plusieurs rouleaux d'entraînement (13),
l'arbre d'entraînement commun (19) traverse tous les rouleaux d'entraînement (13), le cas échéant exception faite du dernier rouleau d'entraînement (13) espacé le plus loin de l'unité d'entraînement (23), jusqu'à l'intérieur duquel l'arbre d'entraînement (13) ne s'étend que partiellement, le cas échéant.

2. Balance à plusieurs voies selon la revendication 1,
**caractérisée en ce que**
l'arbre d'entraînement (19) présente au moins une liaison de transmission de couple de rotation (53) entre l'unité d'entraînement (23) et un tronçon d'arbre (51) auquel le rouleau d'entraînement (13), agencé à côté de l'unité d'entraînement (23), est relié solidairement en rotation, liaison qui permet un pliage ou un coudage de l'arbre d'entraînement (19) lorsque le rouleau d'entraînement respectif (13) est chargé par une matière à peser, et le rouleau d'entraînement est réalisé creux au moins partiellement et ladite au moins une liaison de transmission de couple de rotation (53) est agencée à l'intérieur du rouleau d'entraînement (13).

3. Balance à plusieurs voies selon la revendication 2,
**caractérisée en ce que**
l'arbre d'entraînement (19) présente une autre liaison de transmission de couple de rotation (53) entre l'unité d'entraînement (23) et le tronçon d'arbre (51) auquel le rouleau d'entraînement (13), agencé à côté de l'unité d'entraînement (23), est relié solidairement en rotation, liaison qui est agencée à l'extérieur du rouleau d'entraînement (13) agencé à côté de l'unité d'entraînement (23), et de préférence une pièce intermédiaire d'arbre (49) rigide est agencée entre les deux liaisons de transmission de couple de rotation (53).

4. Balance à plusieurs voies selon l'une des revendications précédentes,
**caractérisée en ce que**
l'arbre d'entraînement (19) présente deux liaisons de transmission de couple de rotation (53) entre les deux tronçons d'arbre (51) respectifs auxquels les deux rouleau d'entraînement (13), agencés l'un à côté de l'autre, sont reliés solidairement en rotation, liaisons dont l'une est agencée à l'intérieur de l'un des rouleaux d'entraînement (13) et l'autre est agencée à l'intérieur de l'autre rouleau d'entraînement (13) desdits deux rouleaux d'entraînement (13) respectifs, et de préférence une pièce intermédiaire d'arbre (49) rigide est agencée entre les deux liaisons de transmission de couple de rotation (53) respectives.

5. Balance à plusieurs voies selon la revendication 4,
**caractérisée en ce que**
en direction axiale, le tronçon d'arbre respectif (51) présente une longueur inférieure à celle de la pièce intermédiaire d'arbre (49) respective.

6. Balance à plusieurs voies selon l'une au moins des revendications précédentes,
**caractérisée en ce que**
la liaison du tronçon d'arbre respectif (51) solidairement en rotation avec le rouleau d'entraînement respectif (13) est agencée au milieu en direction axiale du rouleau d'entraînement respectif (13).

7. Balance à plusieurs voies selon l'une au moins des revendications précédentes,
**caractérisée en ce que**
la liaison de transmission de couple de rotation (53) respective est réalisée sous forme de liaison d'articulation, en particulier sous forme de joint à cardan, et/ou
l'arbre d'entraînement (19) est réalisé sous forme d'arbre d'articulation, en particulier sous forme d'arbre à cardan.

8. Balance à plusieurs voies selon l'une au moins des revendications précédentes,
**caractérisée en ce que**
le rouleau d'entraînement respectif (13) est supporté sur la cellule de pesage respective (17) par un porte-charge (15) respectif.

9. Balance à plusieurs voies selon la revendication 8,
**caractérisée en ce que**
le rouleau d'entraînement respectif (13) est inséré dans un logement de rouleau d'entraînement respectif du porte-charge respectif (15), et en particulier le logement de rouleau d'entraînement comprend deux branches (41) en forme de fourche et ouvertes vers le haut qui sont agencées aux extrémités côté frontal du rouleau d'entraînement (13) respectif.

10. Balance à plusieurs voies selon la revendication 8 ou 9,
**caractérisée en ce que**
à ses extrémités côté frontal, le rouleau d'entraînement respectif (13) comprend un siège de palier lisse (37) retenu sur le porte-charge respectif (15), et en particulier une fente périphérique est ménagée entre l'arbre d'entraînement (19) et le siège de palier lisse (37) respectif.

11. Balance à plusieurs voies selon l'une au moins des revendications précédentes,
**caractérisée en ce que**
l'arbre d'entraînement (19) est monté en flottement en direction axiale, en particulier par le tronçon d'arbre respectif (51) et par le rouleau d'entraînement respectif (13).

12. Balance à plusieurs voies selon l'une au moins des revendications précédentes,
**caractérisée en ce que**
l'arbre d'entraînement (19) est précontraint dans le sens axial en direction de l'unité d'entraînement (23).

13. Balance à plusieurs voies selon la revendication 12,
**caractérisée en ce que**
la précontrainte axiale est assurée par un ressort (59) qui attaque de préférence à l'extrémité de l'arbre d'entraînement (19) opposée à l'extrémité côté unité d'entraînement.

14. Balance à plusieurs voies selon l'une au moins des revendications précédentes,
**caractérisée en ce que**
la cellule de pesage respective (17) et/ou l'unité d'entraînement (23) sont retenues solidairement sur le bâti.

15. Balance à plusieurs voies selon l'une au moins des revendications précédentes,
**caractérisée en ce que**
le rouleau d'entraînement respectif (13) est réalisé sous forme de rouleau de mesure pour mesurer le poids.
